(19) Europäisches Patentamt / European Patent Office / Office européen des brevets

(11) **EP 3 853 285 B1**

(12) **EUROPÄISCHE PATENTSCHRIFT**

(45) Veröffentlichungstag und Bekanntmachung des Hinweises auf die Patenterteilung:
**13.07.2022 Patentblatt 2022/28**

(21) Anmeldenummer: **19765477.5**

(22) Anmeldetag: **09.09.2019**

(51) Internationale Patentklassifikation (IPC):
**C08G 59/62** $^{(2006.01)}$ **C08G 59/68** $^{(2006.01)}$
**C09J 163/00** $^{(2006.01)}$

(52) Gemeinsame Patentklassifikation (CPC):
**C08G 59/68; C04B 26/14; C04B 40/065; C04B 40/0666; C08G 59/56; C08G 59/623; C09J 163/00**

(86) Internationale Anmeldenummer:
**PCT/EP2019/073937**

(87) Internationale Veröffentlichungsnummer:
**WO 2020/058015 (26.03.2020 Gazette 2020/13)**

(54) **HÄRTERZUSAMMENSETZUNG FÜR EINE EPOXIDHARZMASSE, EPOXIDHARZMASSE UND MEHRKOMPONENTEN-EPOXIDHARZSYSTEM**

CURING AGENT COMPOSITION FOR AN EPOXY RESIN COMPOSITION, EPOXY RESIN COMPOSITION AND MULTI-COMPONENT EPOXY RESIN SYSTEM

COMPOSITION DURCISSANTE POUR UNE MASSE DE RÉSINE ÉPOXY, MASSE DE RÉSINE ÉPOXY ET SYSTÈME DE RÉSINE ÉPOXY MULTICOMPOSANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.09.2018 EP 18195422**

(43) Veröffentlichungstag der Anmeldung:
**28.07.2021 Patentblatt 2021/30**

(73) Patentinhaber: **Hilti Aktiengesellschaft**
**9494 Schaan (LI)**

(72) Erfinder:
• **BEHRENS, Nicole**
  **81245 München (DE)**
• **BORNSCHLEGL, Alexander**
  **81245 München (DE)**

(74) Vertreter: **Hilti Aktiengesellschaft**
**Corporate Intellectual Property**
**Feldkircherstrasse 100**
**Postfach 333**
**9494 Schaan (LI)**

(56) Entgegenhaltungen:
**WO-A1-2005/090433    US-A- 5 629 380**

# EP 3 853 285 B1

**Beschreibung**

Die Erfindung betrifft eine Härterzusammensetzung für eine Epoxidharzmasse zur chemischen Befestigung von Konstruktionselementen, eine Epoxidharzmasse sowie ein Mehrkomponenten-Epoxidharzsystem. Die Erfindung betrifft ferner ein Verfahren zur chemischen Befestigung von Konstruktionselementen in Bohrlöchern. Die Erfindung betrifft auch die Verwendung eines Salzes (S) als Beschleuniger in einer Epoxidharzmasse zur chemischen Befestigung, wobei die Epoxidharzmasse eine Mannich-Base und ein gegenüber Epoxidgruppen reaktives Amin umfasst. Mehrkomponenten-Mörtelmassen auf der Grundlage von härtbaren Epoxidharzen und Aminhärtern sind seit langem bekannt und werden als Klebstoffe, Spachtelmassen zur Rissverfüllung und chemische Dübel zur Befestigung von Konstruktionselementen wie Ankerstangen, Bewehrungseisen und Schrauben in Bohrlöchern verschiedenen Untergrunds verwendet. Die Anwendung von bekannten Mörtelmassen in Ländern mit hohen Temperaturen, wie beispielsweise die Vereinigten Arabischen Emirate, ist jedoch stark limitiert, da bereits ab einer Temperatur von 35 °C die Belastbarkeit (Versagenslasten) der Mörtelmassen abnehmen. Des Weiteren wirken sich hohe Temperaturen negativ auf die Handhabbarkeit und die Verarbeitungsdauer der Mörtelmassen auf den Baustellen aus.

Bei herkömmlichen Mörtelmassen ist zur Erzielung einer guten Handhabbarkeit ein hoher Anteil von niedrigviskosen Bestandteilen, einen geringen Füllstoffanteil und grobe Füllstoffe vorzusehen, was allerdings für ein geringes Kriechverhalten unter Last bei erhöhten Temperaturen von Nachteil ist. Andererseits wird eine lange Verarbeitungszeit durch einen hohen Anteil an nicht reaktiven bzw. nicht vernetzenden Verdünnern und wenig reaktiven Komponenten erreicht, was einer kurzen Aushärtezeit entgegensteht. Die Verwendung von Mannich-Basen als Bestandteil von Härterzusammensetzungen für Epoxidharze ist bekannt und wird unter anderem in der DE 10 2013 113465 A und der WO 2005/090433 A beschrieben. Die Mannich-Basen werden üblicherweise in Kombination mit Polyaminen und wahlweise weiteren Bestandteilen als Härterzusammensetzung von Mehrkomponenten-Epoxidharzmassen für Befestigungszwecke eingesetzt.

Auch in der US 5629380 A werden härtbare Epoxidharz-Zusammensetzungen bestehend aus zwei Komponenten beschrieben. Die erste Komponente umfasst einen Aminhärter und einen Beschleuniger, die zweite Komponente umfasst ein Epoxidharz mit einer mittleren Epoxidfunktionalität von größer 1. Die in der ersten Komponente enthaltenen Beschleuniger umfassen Mannichbasen aus tertiären Aminen und ein Metallsalz, bevorzugt ein Calciumsalz wie z.B. Calciumtriflat.

Die WO 2014/067095 A beschreibt eine Härterzusammensetzung für Epoxide, die eine Kombination von Phenalkamin und styrolisiertem Phenol oder styrolisiertem Phenolnovolak enthält. Das Phenalkamin ist eine besondere, stark hydrophobe Mannich-Base, die durch Umsetzung von Cashewschalenöl (cashew nut shell liquid; CNSL), Formaldehyd und Polyaminen wie Diethylendiamin gewonnen wird.

Mörtelmassen auf Epoxid-Amin-Basis mit Mannich-Basen weisen generell eine langsame Aushärtekinetik auf, die in einem gewissen Rahmen durch den Phenolgehalt der Mannich-Base gesteuert werden kann. Im Übrigen ist die Aushärtegeschwindigkeit aber von dem in der Mischung vorhandenen Amin abhängig. Übliche, auf dem Markt befindliche Epoxidharzmassen mit Härtern auf der Grundlage von Mannich-Basen wie beispielsweise RE 100 (Fa. Hilti, Schaan, Liechtenstein) oder FIS EM 390 S (Fa. Fischer, Waldachtal, DE) haben in der Anwendung eine Aushärtedauer von mindestens 12 Stunden bei 20°C, wobei die Aushärtedauer die Zeit bezeichnet, nach der die Befestigung mit 90% der Referenzlast belastet werden kann. Eine Beschleunigung der Aushärtezeit ist sinnvoll, um Wartezeiten vor dem nächsten Arbeitsschritt zu verkürzen.

In der noch nicht veröffentlichten europäischen Patentanmeldung mit der Anmeldenummer 17200077.0 werden Mörtelmassen auf Grundlage von Epoxidharzen und Mannich-Basen beschrieben, bei denen als Beschleuniger ein Polyphenol aus der Gruppe der Novolakharze eingesetzt wird. Novolakharze liegen üblicherweise als Feststoffe vor, die in der Härterzusammensetzung gelöst werden müssen. Ferner müssen die Novolakharze in großen Mengen eingesetzt werden, um eine ausreichende Beschleunigung zu erreichen. Dies führt dazu, dass die entsprechenden Mörtelmassen hohe Viskositäten aufweisen, was zu hohen Auspresskräften bei der Applikation führt.

Aufgabe der Erfindung ist es daher eine Epoxidharzmasse bereitzustellen, die wenigstens eine Mannich-Base enthält und die für Befestigungszwecke geeignet ist, wobei die Epoxidharzmasse im Vergleich zu herkömmlichen Mörtelmassen eine verkürzte Aushärtedauer bei vergleichbar hoher Auszugsfestigkeit aufweisen soll. Insbesondere ist es Aufgabe der vorliegenden Erfindung eine Epoxidharzmasse bereitzustellen, die im Vergleich zu herkömmlichen Mörtelmassen eine verkürzte Aushärtedauer aufweist und eine verbesserte Auszugsfestigkeit bei erhöhten Temperaturen, wie beispielsweise in einem Temperaturbereich von 35 °C bis 50 °C, aufweist. Des Weiteren ist es wünschenswert, dass die Epoxidharzmasse im Vergleich zu herkömmlichen Mörtelmassen auf Epoxid-Amin Basis eine verbesserte Auszugsfestigkeit in wassergefüllten Bohrlöchern zeigt.

Die der Erfindung zugrundeliegende Aufgabe wird durch Bereitstellung einer Härterzusammensetzung gemäß Anspruch 1 gelöst. Bevorzugte Ausführungsformen der erfindungsgemäßen Härterzusammensetzung sind in den Unteransprüchen angegeben, die wahlweise miteinander kombiniert werden können.

Gegenstand der Erfindung ist ferner eine Epoxidharzmasse gemäß Anspruch 10 und ein Mehrkomponenten-Epoxidharzsystem nach Anspruch 12. Bevorzugte Ausführungsformen der erfindungsgemäßen Epoxidharzmasse und des Mehrkomponenten-Epoxidharzsystems sind in den Unteransprüchen angegeben, die wahlweise miteinander kombiniert werden können.

Gegenstand der Erfindung ist ferner ein Verfahren zur chemischen Befestigung von Konstruktionselementen in Bohrlöchern gemäß Anspruch 14.

Die Erfindung umfasst ferner die Verwendung mindestens eines Salzes (S) als Beschleuniger in einer Epoxidharzmasse gemäß Anspruch 15.

Erfindungsgemäß wird eine Härterzusammensetzung für eine Epoxidharzmasse bereitgestellt, die als Härter wenigstens eine Mannich-Base und ein gegenüber Epoxidgruppen reaktives Amin umfasst, sowie als Beschleuniger wenigstens ein Salz (S). Erfindungsgemäß ist die Mannich-Base erhältlich durch Umsetzung einer aus Phenol, styrolisiertem Phenol, Brenzkatechin, Resorcin, Hydrochinon, Hydroxyhydrochinon, Phloroglucin, Pyrogallol, o-Kresol, m-Kresol, p-Kresol und Bisphenolen bestehenden Gruppe ausgewählten phenolischen Verbindung, mit einem Aldehyd oder einer Aldehydvorstufe und einem Amin mit wenigstens zwei an ein Stickstoffatom gebundenen aktiven Wasserstoffatomen im Molekül. Erfindungsgemäß wird das als Beschleuniger verwendete Salz (S) aus der Gruppe bestehend aus Salzen der Salpetersäure, Salzen der Salpetrigen Säure, Salzen der Halogene, Salzen der Trifluormethansulfonsäure sowie Kombinationen davon ausgewählt.

Die Verwendung der erfindungsgemäßen Härterzusammensetzung in einer Epoxidharzmasse für Befestigungszwecke führt zu einer erheblichen Beschleunigung der Aushärtereaktion. Die gehärteten Massen zeigen eine hervorragende Auszugsfestigkeit bei erhöhten Temperaturen und können bereits nach kurzer Zeit, innerhalb von etwa 4 bis 6 Stunden, belastet werden. Somit eignen sich die erfindungsgemäße Härterzusammensetzung sowie die daraus hergestellten Epoxidharzmassen insbesondere für die Anwendung in Ländern mit hohen Temperaturen. Ferner zeigen die gehärteten Massen eine hervorragende Auszugsfestigkeit im wassergefüllten Bohrloch.

Gemäß einer bevorzugten Ausführungsform der erfindungsgemäßen Härterzusammensetzung ist das gegenüber Epoxidharzen reaktive Amin aus der aus aliphatischen, alicyclischen, araliphatischen und aromatischen Aminen bestehenden Gruppe ausgewählt. Das Amin weist bevorzugt im Mittel mindestens zwei an ein Stickstoffatom gebundene reaktive Wasserstoffatome pro Molekül auf.

Gegenüber Epoxidgruppen reaktive Amine sind dem Fachmann grundsätzlich bekannt. Bevorzugt ist das Amin ein Polyamin mit mindestens zwei Aminogruppen im Molekül. Bei Verwendung von Polyaminen in der Härterzusammensetzung können besonders stabile Netzwerke erhalten werden.

Im Sinne der Erfindung haben die hier und in der nachfolgenden Beschreibung verwendeten Begriffe die folgende Bedeutung:

*"aliphatische Verbindungen"* sind acyclische oder cyclische, gesättigte oder ungesättigte Kohlenstoffverbindungen, ausgenommen aromatische Verbindungen;

*"alicyclische Verbindungen"* sind Verbindungen mit einer carbocyclischen Ringstruktur, ausgenommen Benzolderivate oder andere aromatische Systeme;

*"araliphatische Verbindungen"* sind aliphatische Verbindungen mit einem aromatischen Grundgerüst, so dass im Falle einer funktionalisierten araliphatischen Verbindung eine vorhandene funktionelle Gruppe an den aliphatischen und nicht den aromatischen Teil der Verbindung angebunden ist;

*"aromatische Verbindungen"* sind Verbindungen, die der Hückel (4n+2)-Regel folgen;

*"Amine"* sind Verbindungen, die durch Austausch von einem, zwei oder drei Wasserstoffatomen durch Kohlenwasserstoffgruppen aus Ammoniak abgeleitet sind und die allgemeinen Strukturen $RNH_2$ (primäre Amine), $R_2NH$ (sekundäre Amine) und $R_3N$ (tertiäre Amine) aufweisen (siehe: IUPAC Compendium of Chemical Terminology, 2nd ed. (the "Gold Book"), Compiled by A. D. McNaught and A. Wilkinson, Blackwell Scientific Publications, Oxford (1997)): und

*"Salze"* sind Verbindungen, die aus positiv geladenen Ionen (Kationen) und negativ geladenen Ionen (Anionen) aufgebaut sind. Zwischen diesen Ionen liegen ionische Bindungen vor. Der Ausdruck *"Salze der Salpetersäure"* beschreibt Verbindungen, die von Salpetersäure ($HNO_3$) abgeleitet werden und als Anion ein Nitrat ($NO_3^-$) umfassen. Der Ausdruck *"Salze der Salpetrige Säure"* beschreibt Verbindungen, die von der Salpetrigen Säure ($HNO_2$) abgeleitet werden und als Anion ein Nitrit ($NO_2^-$) umfassen. Der Ausdruck *"Salze der Halogene"* beschreibt Verbindungen, die als Anion ein Element der 7. Hauptgruppe des Periodensystems umfassen. Insbesondere sind unter dem Ausdruck der *"Salze der Halogene"* solche Verbindungen zu verstehen, die die als Anion ein Fluorid ($F^-$), Chlorid ($Cl^-$), ein Bromid (Br) oder Iodid ($I^-$) umfassen. Der Ausdruck *"Salze der Trifluormethansulfonsäure"* beschreibt Verbindungen, die von der Trifluormethansulfonsäure ($CF_3SO_3H$) abgeleitet werden und als Anion ein Triflat ($CF_3SO_3^-$) umfassen. Der Begriff Salz im Sinne der vorliegenden Erfindung umfasst auch die entsprechenden Hydrate der Salze. Die Salze (S), welche als Beschleuniger eingesetzt werden, werden auch als Salze im Sinne der vorliegenden Erfindung bezeichnet.

Beispiele für gegenüber Epoxidgruppen reaktive geeignete Amin sind im Folgenden angegeben, ohne jedoch den Umfang der Erfindung einzuschränken: 1,2-Diaminoethan(ethylendiamin), 1,2-Propandiamin, 1,3-Propandiamin, 1,4-Diaminobutan, 2,2-Dimethyl-1, 3-propandiamin(neopentandiamin), Diethylaminopropylamin (DEAPA), 2-Methyl-1,5-diaminopentan, 1,3-Diaminopentan, 2,2,4- oder 2,4,4-Trimethyl-1, 6-diaminohexan und Gemische davon (TMD), 1,3-Bis(aminomethyl)-cyclohexan, 1,2-Bis(aminomethyl)cyclohexan, Hexamethylendiamin (HMD), 1,2- und 1,4-Diaminocyclohexan (1,2-DACH und 1,4-DACH), Bis(4-amino-3-methylcyclohexyl)methan, Diethylentriamin (DETA), 4-Azaheptan-1, 7-diamin, 1,11-Diamino-3, 6,9-trioxundecan, 1,8-Diamino-3, 6-dioxaoctan, 1,5-Diamino-methyl-3-azapentan, 1,10-Diamino-4, 7-dioxadecan, Bis(3-aminopropyl)amin, 1,13-Diamino-4,7, 10-trioxatridecan, 4-Aminomethyl-1, 8-diaminooctan, 2-Butyl-2-ethyl-1, 5-diaminopentan, N, N-Bis-(3-aminopropyl)methylamin, Triethylentetramin (TETA), Tetraethylenpentamin (TEPA), Pentaethylenhexamin (PEHA), 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), 3-Aminomethyl-3,5,5-trimethylcyclohexylamin (Isophorondiamin (IPDA)), Diaminodicyclohexylmethan (PACM), Diethylmethylbenzoldiamin (DETDA), 4,4'-Diaminodiphenylsulfon (Dapson), gemischte polycyclische Amine (MPCA) (z.B. Ancamine 2168), Dimethyldiaminodicyclohexylmethan (Laromin C260), 2,2-Bis(4-aminocyclohexyl)propan, (3(4),8(9)Bis(aminomethyldicyclo[5.2.1.0$^{2,6}$] decan (Isomerengemisch, tricyclischer primärer Amine; TCD-Diamin), Methylcyclohexyl-diamin (MCDA), N,N'-Diaminopropyl-2-methyl-cyclohexan-1,3-diamin, N,N'-Diaminopropyl-4-methyl-cyclohexan-1,3-diamin, N-(3-Aminopropyl)cyclohexylamin, und 2-(2,2,6,6-tetramethylpiperidin-4-yl)propan-1,3-diamin.

Bevorzugte gegenüber Epoxidgruppen reaktive geeignete Amin in der erfindungsgemäßen Härterzusammensetzung sind Polyamine, wie 2-Methylpentandiamin (DYTEKA), 3-Aminomethyl-3,5,5-trimethylcyclohexan (IPDA), 1,3-Benzoldimethanamin (m-Xylylendiamin, mXDA), 1,4-Benzoldimethanamin (p-Xylylendiamin, PXDA), 1,6-Diamino-2, 2,4-trimethylhexan (TMD), Diethylentriamin (DETA), Triethylentetramin (TETA), Tetraethylenpentamin (TEPA), Pentaethylenhexamin (PEHA), N-Ethylaminopiperazin (N-EAP), (3(4),8(9)Bis(aminomethyl)dicyclo[5. 2.1.0$^{2,6}$]decan (Isomerengemisch, tricyclischer primärer Amine; TCD-Diamin), 1,14-Diamino-4, 11-dioxatetradecan, Dipropylentriamin, 2-Methyl-1, 5-pentandiamin, N, N'-Dicyclohexyl-1, 6-hexandiamin, N, N'-Dimethyl-1, 3-diaminopropan, N, N'-Diethyl-1, 3-diaminopropan, N, N-Dimethyl-1, 3-diaminopropan, sekundäre Polyoxypropylendi- und triamine, 2,5-Diamino-2, 5-dimethylhexan, Bis(amino-methyl)tricyclopentadien, 1,8-Diamino-p-menthan, Bis-(4-amino-3, 5-dimethylcyclohexyl)methan, 1,3-Bis(aminomethyl)cyclohexan (1,3-BAC), Dipentylamin, N-2-(Aminoethyl)piperazin (N-AEP), N-3-(Aminopropyl)piperazin, Piperazin, Methylcyclohexyl-diamin (MCDA).

Die Amine können sowohl einzeln als auch im Gemisch von zwei oder mehreren der genannten Amine eingesetzt werden.

Die in der erfindungsgemäßen Härterzusammensetzung in Kombination mit den oben beschriebenen gegenüber Epoxidgruppen reaktiven Aminen verwendeten Mannichbasen sind die Reaktionsprodukte eines Amins und eines Aldehyds mit einer phenolischen Verbindung, die aus der aus Phenol, Brenzkatechin, Resorcin, Hydrochinon, Hydroxyhydrochinon, Phloroglucin, Pyrogallol, o-Kresol, m-Kresol, p-Kresol, Bisphenolen wie Bisphenol F oder Bisphenol A, und Kombinationen davon bestehenden Gruppe ausgewählt ist.

Zur Bildung der Mannich-Base wird die phenolische Verbindung mit einem vorzugsweise primären oder sekundären Amin und einem Aldehyd oder einer Aldehydvorstufe umgesetzt, die durch Zersetzung einen Aldehyd ergibt. Der Aldehyd oder die Aldehydvorstufe kann vorteilhaft als wässrige Lösung, insbesondere bei erhöhter Temperatur von etwa 50°C bis 90°C, zu der Reaktionsmischung zugesetzt und mit dem Amin sowie der phenolischen Verbindung umgesetzt werden.

Als phenolische Verbindung werden bevorzugt Phenol oder ein styrolisiertes Phenol, Resorcin, styrolisiertes Resorcin, Bisphenol A oder Bisphenol F, besonders bevorzugt Phenol oder ein styrolisiertes Phenol, styrolisiertes Resorcin oder Bisphenol A zur Bildung der Mannich-Base verwendet.

Der zur Bildung der Mannich-Base verwendete Aldehyd ist bevorzugt ein aliphatischer Aldehyd, besonders bevorzugt Formaldehyd. Als Aldehyd-Vorstufe können bevorzugt Trioxan oder Paraformaldehyd verwendet werden, die durch Erhitzen in Gegenwart von Wasser zu Formaldehyd zerfallen.

Das zur Umsetzung mit dem Aldehyd und der phenolischen Verbindung unter Bildung der Mannich-Base verwendete Amin ist bevorzugt eines der oben genannten, gegenüber Epoxidgruppen reaktives Amin, und bevorzugt 1,3-Benzoldimethanamin (mXDA), 3-aminomethyl-3, 5,5-trimethylcyclohexan (IPDA), 1,3-Bis(aminomethyl)cyclohexan (1,3-BAC), Diaminodicyclohexylmethan (PACM), Methylcyclohexyl-diamin (mCDA) und 5-(Aminomethyl)bicyclo[[2.2.1] hept-2-yl]methylamin (NBDA). Vorzugsweise liegt das Amin in einem Überschuss vor, so dass die Mannich-Base freie Aminogruppen aufweist.

Das zur Umsetzung mit dem Aldehyd und der phenolischen Verbindung unter Bildung der Mannich-Base verwendete Amin kann auch ein Aminosilan sein, dass ausgewählt ist aus der Gruppe bestehend aus 3-Aminoalkyltrialkoxysilanen, wie 3-Aminopropyl-tri(m)ethoxysilan, 3-Aminoalkylalkyldialkoxysilan, wie 3-Aminopropylmethyldi(m)ethoxysilan, N-(Aminoalkyl)-3-aminoalkyltrialkoxysilanen, wie N-(2-Aminoethyl)-3-aminopropyltri(m)ethoxysilan, N-(Aminoalkyl)-3-aminoalkyl-alkyldialkoxysilanen, wie N-(2-Aminoethyl)-3-aminopropylmethyldi(m)ethoxysilan, 3-[2-(2-Aminoethylamino)ethylamino]propyltri(m)ethoxysilan, Bis-(gamma-Trimethoxysilylpropyl)amin, oder Mischungen davon; oder ferner ausgewählt aus der Gruppe bestehend aus N-Cyclohexyl-3-aminopropyltri(m)ethoxysilan, N-Cyclohexylaminomethylmethyldiethoxysilan, N-Cyclohexylaminomethyltriethoxysilan, 3-Ureidopropyltri(m)ethoxysilan, N-Methyl[3-(Trimethoxysilyl)-propylcarbamat, N-Trimethoxysilylmethyl-O-methylcarbamat und N-Dimethoxy(methyl)silylmethyl-O-methylcarbamat.

Erfindungsgemäß enthält die Härterzusammensetzung als Beschleuniger mindestens ein Salz (S). Das Salz (S) ist erfindungsgemäß mindestens ein Salz ausgewählt aus der Gruppe bestehend aus Salzen der Salpetersäure, Salzen der Salpetrigen Säure, Salzen der Halogene, Salzen der Trifluormethansulfonsäure sowie Kombinationen davon. Vorzugsweise ist das Salz (S) mindestens ein Salz ausgewählt aus der Gruppe bestehend aus Salzen der Salpetersäure, Salzen der Halogene, Salzen der Trifluormethansulfonsäure sowie Kombinationen davon. Es hat sich als besonders bevorzugt herausgestellt, dass das Salz (S) ausgewählt ist aus der Gruppe bestehend aus Nitraten ($NO_3^-$), Iodiden ($I^-$), Triflaten ($CF_3SO_3^-$) sowie Kombinationen davon.

Als Salze der Salpetersäure eignen sich insbesondere Alkalimetallnitrate, Erdalkalimetallnitrate, Lanthanoidnitrate, Aluminiumnitrat, Ammoniumnitrat sowie Mischungen davon. Entsprechende Salze der Salpetersäure sind im Handel käuflich erhältlich. Vorzugsweise werden als Salze der Salpetersäure Alkalimetallnitrate und/oder Erdalkalimetallnitrate verwendet, wie beispielsweise $Ca(NO_3)_2$ oder $NaNO_3$. Es ist auch möglich, dass als Salz (S) eine Lösung eines Salzes in Salpetersäure eingesetzt wird, wie beispielsweise eine Lösung enthaltend $Ca(NO_3)_2/HNO_3$. Zur Herstellung dieser Lösung wird $CaCO_3$ in $HNO_3$ gelöst.

Als Salze der Salpetrigen Säure eignen sich insbesondere Alkalimetallnitrite, Erdalkalimetallnitrite, Lanthanoidnitrite, Aluminiumnitrit, Ammoniumnitrit sowie Mischungen davon. Entsprechende Salze der Salpetrigen Säure sind im Handel käuflich erhältlich. Vorzugsweise werden als Salze der Salpetrigen Säure Alkalimetallnitrite und/oder Erdalkalimetallnitrite verwendet, wie beispielsweise $Ca(NO_2)_2$.

Als Salze der Halogene eignen sich insbesondere Alkalimetallhalogenide, Erdalkalimetallhalogenide, Lanthanoidhalogenide, Aluminiumhalogenide, Ammoniumhalogenide sowie Mischungen davon. Entsprechende Salze der Halogene sind im Handel käuflich erhältlich. Vorzugsweise werden die Halogene ausgewählt aus der Gruppe bestehend aus Chlorid, Bromid, Iodid sowie Mischungen davon, wobei insbesondere Iodide bevorzugt verwendet werden.

Als Salze der Trifluormethansulfonsäure eignen sich insbesondere Alkalimetalltriflate, Erdalkalimetalltriflate, Lanthanoidtriflate, Aluminiumtriflat, Ammoniumtriflat sowie Mischungen davon. Entsprechende Salze der Trifluormethansulfonsäure sind im Handel käuflich erhältlich. Vorzugsweise werden als Salze der Trifluormethansulfonsäure Alkalimetallnitrate und/oder Erdalkalimetallnitrate verwendet, wie beispielsweise $Ca(CF_3SO_3)_2$.

Prinzipiell können die Kationen des Salzes (S) organisch, anorganisch oder eine Mischung daraus sein. Vorzugsweise ist das Kation des Salzes (S) ein anorganisches Kation.

Als organische Kationen kommen beispielsweise mit organischen Resten, wie beispielsweise mit $C_1$-$C_6$-Alkylresten substituierte Ammoniumkationen, wie Tetraethylammoniumkationen, in Betracht.

Als anorganische Kationen des Salzes (S) kommen vorzugsweise Kationen in Betracht, die ausgewählt werden aus der Gruppe bestehend aus Alkalimetallen, Erdalkalimetallen, Lanthanoiden, Aluminium, Ammonium ($NH_4^+$) sowie Mischungen davon, bevorzugter aus der Gruppe bestehend aus Alkalimetallen, Erdalkalimetallen, Aluminium, Ammonium sowie Mischungen davon und noch bevorzugter aus der Gruppe bestehend aus Alkalimetallen, Erdalkalimetallen, Aluminium sowie Mischungen davon. Es ist insbesondere bevorzugt, dass das Kation des Salzes (S) ausgewählt ist aus der Gruppe bestehend aus Natrium, Calcium, Aluminium, Ammonium sowie Mischungen davon.

Somit eignen sich als Salz (S) insbesondere die folgenden Verbindungen bzw. Komponenten: $Ca(NO_3)_2$ (Calciumnitrat, üblicherweise eingesetzt als $Ca(NO_3)_2$ Tetrahydrat), eine Mischung aus $Ca(NO_3)_2/HNO_3$, $KNO_3$ (Kaliumnitrat), $NaNO_3$ (Natriumnitrat), $Mg(NO_3)_2$ (Magnesiumnitrat, üblicherweise eingesetzt als $Mg(NO_3)_2$ Hexahydrat), $Al(NO_3)_3$ (Aluminiumnitrat, üblicherweise eingesetzt als $Al(NO_3)_3$ Nonahydrat), $NH_4NO_3$ (Ammoniumnitrat), $Ca(NO_2)_2$ (Calciumnitrit), $NaCl$ (Natriumchlorid), $NaBr$ (Natriumbromid), $NaI$ (Natriumiodid), $Ca(CF_3SO_3)_2$ (Calciumtriflat), $Mg(CF_3SO_3)_2$ (Magnesiumtriflat), $Li(CF_3SO_3)_2$ (Lithiumtriflat).

Die erfindungsgemäße Härterzusammensetzung kann ein oder mehrere Salze (S) aufweisen. Die Salze können sowohl einzeln als auch im Gemisch von zwei oder mehreren der genannten Salze eingesetzt werden.

Zur Verbesserung der Löslichkeitseigenschaften des Salzes (S) in der Härterzusammensetzung kann es vorgesehen sein, dass das Salz (S) in einem geeigneten Lösemittel gelöst wird und entsprechend als Lösung eingesetzt wird. Hierfür eignen sich beispielsweise organische Lösemittel wie Methanol, Ethanol und Glycerin. Als Lösemittel kann aber auch Wasser verwendet werden, gegebenenfalls auch in Mischung mit den vorgenannten organischen Lösemitteln. Zur Herstellung der entsprechenden Salzlösungen wird das Salz (S) in das Lösemittel gegeben und gerührt, vorzugsweise bis zur bis zur vollständigen Lösung.

Das Salz (S) ist vorzugsweise in einem Anteil von 0,1 bis 15 Gew.-% bezogen auf das Gesamtgewicht der Härterzusammensetzung in der Härterzusammensetzung enthalten. Vorzugsweise ist das Salz (S) in einem Anteil von 0,5 bis 12 Gew.-%, bevorzugter in einem Anteil 1,0 bis 10,0 noch bevorzugter in einem Anteil von 1,5 bis 8,0 Gew.-% bezogen auf das Gesamtgewicht der Härterzusammensetzung in der Härterzusammensetzung enthalten.

Das gegenüber Epoxidgruppen reaktive Amin ist in der Härterzusammensetzung bevorzugt in einem Anteil von 10 bis 90 Gew.-%, besonders bevorzugt 35 bis 70 Gew.-% bezogen auf das Gesamtgewicht der Härterzusammensetzung enthalten. Des Weiteren enthält die Härterzusammensetzung die mindestens eine Mannich-Base bevorzugt in einem Anteil von 4 bis 70 Gew.-%, besonders bevorzugt 12 bis 65 Gew.-%, jeweils bezogen auf das Gesamtgewicht der Härterzusammensetzung.

In einer weiteren Ausführungsform umfasst die Härterzusammensetzung weitere Additive aus der Gruppe der Lösemittel, Co-Beschleuniger, Haftvermittler und anorganischen Füllstoffe.

Nicht reaktive Verdünnungsmittel (Lösungsmittel) können vorzugsweise in einer Menge bis zu 30 Gew.-% enthalten sein, bezogen auf die das Gesamtgewicht der Härterzusammensetzung, beispielsweise von 1 bis 20 Gew.-%. Beispiele für geeignete Lösungsmittel sind Alkohole, wie Methanol, Ethanol oder Glycole, Niederalkylketone wie Aceton, Diniederalkylniederalkanoylamide wie Dimethylacetamid, Niederalkylbenzole wie Xylole oder Toluol, Phthalsäureester oder Paraffine. Vorzugsweise liegt die Menge an Lösungsmitteln bei ≤ 5 Gew.-% bezogen auf das Gesamtgewicht der Härterzusammensetzung.

Als Co-Beschleuniger können beispielsweise Benzylalkohol, tertiäre Amine, Imidazole oder tertiäre Aminophenole, Organophosphine, Lewis-Basen oder -Säuren wie Phosphorsäureester, oder Gemische von zwei oder mehr davon verwendet werden. Die Co-Beschleuniger können auch in der Epoxidharzkomponente (A) vorliegen, soweit sie mit den Epoxidharzen verträglich sind.

Bevorzugt sind die Co-Beschleuniger in der Härterzusammensetzung in einem Gewichtsanteil von 0,001 bis 5 Gew.-% enthalten, bezogen auf das Gesamtgewicht der Härterzusammensetzung.

Beispiele für geeignete Co-Beschleuniger sind insbesondere Tris-2,4,6-dimethylaminomethylphenol, 2,4,6-Tris(dimethylamino)phenol und Bis[(dimethylamino)methyl]phenol. Ein geeignetes Co-Beschleunigergemisch enthält 2,4,6-Tris(dimethylaminomethyl)phenol und Bis(dimethylaminomethyl)phenol. Solche Gemische sind kommerziell erhältlich, beispielsweise als Ancamine® K54 (Evonik, Deutschland).

Durch den Einsatz eines Haftvermittlers wird die Vernetzung der Bohrlochwand mit der Mörtelmasse verbessert, so dass sich die Haftung im ausgehärteten Zustand erhöht. Geeignete Haftvermittler sind aus der Gruppe der Silane ausgewählt, die mindestens eine Si-gebundene hydrolisierbare Gruppe aufweisen, wie beispielsweise 3-Glycidoxypropyltrimethoxysilan, 3-Glycidoxypropyltriethoxysilan, 2-(3,4-Epoxycyclohexyl)ethyltrimethoxysilan, N-2-(Aminoethyl)-3-aminopropylmethyl-diethoxysilan, N-2-(Aminoethyl)-3-aminopropyl-triethoxysilan, 3-Aminopropyltrimethoxysilan, 3-Aminopropyltriethoxysilan, N-Phenyl-3-aminoethyl-3-aminopropyl-trimethoxysilan, 3-Mercaptopropyltrimethoxysilan und 3-Mercaptopropylmethyldimethoxysilan. Als Haftvermittler sind insbesondere 3-Aminopropyl-trimethoxysilan (AMMO), 3-Aminopropyltriethoxysilan (AMEO), 2-Aminoethyl-3-aminopropyl-trimethoxysilan (DAMO) und Trimethoxysilylpropyldiethylentetramin (TRIAMO) bevorzugt. Weitere Silane sind beispielsweise in der EP3000792 A1 beschrieben, deren Inhalt hiermit in die vorliegende Anmeldung mit aufgenommen wird.

Der Haftvermittler kann in einer Menge bis zu 10 Gew.-%, bevorzugt 0,1 bis 5 Gew.-%, weiter bevorzugt 1,0 bis 2,5 Gew.-% bezogen auf das Gesamtgewicht der Härterzusammensetzung enthalten sein.

Als Füllstoffe dienen anorganische Füllstoffe, insbesondere Zemente wie Portlandzement oder Aluminatzement sowie andere hydraulisch abbindende anorganische Stoffe, Quarz, Glas, Korund, Porzellan, Steingut, Schwerspat, Leichtspat, Gips, Talkum und/oder Kreide sowie deren Mischungen. Des Weiteren können auch Verdicker wie pyrogene Kieselsäure als anorganischer Füllstoff verwendet werden. Als Füllstoffe kommen insbesondere nicht oberflächenbehandelte Quarzmehle, Feinquarzmehle und Feinstquarzmehle, wie beispielsweise Millisil W3, Millisil W6, Millisil W8 und Millisil W12, bevorzugt Millisil W12, in Frage. Ferner können silanisierte Quarzmehle, Feinquarzmehle und Feinstquarzmehl eingesetzt werden. Diese sind beispielsweise käuflich unter der Produktserie Silbond der Firma Quarzwerke erhältlich. Hierbei sind die Produktserien Silbond EST (Epoxysilanmodifiziert) und Silbond AST (aminosilanbehandelt) besonders bevorzugt. Ferner können Aluminiumoxid basierte Füllstoffe wie beispielsweise Aluminiumoxidfeinstfüller vom Typ ASFP der Firma Denka, Japan, ($d_{50}$ = 0,3 μm) oder Qualitäten wie DAW oder DAM mit den Typenbezeichnungen 45 ($d_{50}$ < 0,44 μm), 07 ($d_{50}$ > 8,4 μm), 05 ($d_{50}$ < 5,5 μm), 03 (dso < 4,1 μm). Weiterhin können die oberflächenbehandelte Fein- und Feinstfüllstoffe vom Typ Aktisil AM (aminosilanbehandelt, $d_{50}$ = 2,2 μm) und Aktisil EM (epoxysilanbehandelt, d50=2,2 μm) von Hoffman Mineral verwendet werden.

Die anorganischen Füllstoffe können in Form von Sanden, Mehlen oder Formkörpern, vorzugsweise in Form von Fasern oder Kugeln, zugesetzt werden. Die Füllstoffe können in einer oder in allen Komponenten des später beschriebenen Mehrkomponenten-Epoxidharzsystems vorhanden sein. Durch eine geeignete Auswahl der Füllstoffe hinsichtlich Art und Korngrößenverteilung/(Faser)länge können applikationsrelevante Eigenschaften, wie rheologisches Verhalten, Auspresskräfte, innere Festigkeit, Zugfestigkeit, Auszugskräfte und Schlagzähigkeit gesteuert werden.

Der Anteil an Füllstoffen beträgt vorzugsweise 0 bis 75 Gew.-%, beispielsweise 10 bis 75 Gew.-%, bevorzugt 15 bis 75 Gew.-% und weiter bevorzugt 20 bis 50 Gew.-%, noch weiter bevorzugt 25 bis 40 Gew.-%, bezogen auf das Gesamtgewicht der Härterzusammensetzung.

Gegenstand der vorliegenden Erfindung ist ferner eine Epoxidharzmasse, die mindestens ein härtbares Epoxidharz und eine Härterzusammensetzung wie zuvor beschrieben umfasst. Bevorzugt handelt es sich bei der Epoxidharzmasse um eine Mehrkomponenten-Epoxidharzmasse, bevorzugt um eine Zweikomponenten-Epoxidharzmasse.

Als härtbares Epoxidharz in der Epoxidharzkomponente (A) kommt eine Vielzahl der hierfür dem Fachmann bekannten und kommerziell erhältlichen Verbindungen in Betracht, die im Mittel mehr als eine Epoxid-Gruppe, vorzugsweise zwei EpoxidGruppen, pro Molekül enthalten. Diese Epoxidharze können sowohl gesättigt als auch ungesättigt sowie aliphatisch, alicyclisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppen und ähnliche. Im Rahmen der Erfindung sind auch trimere und tetramere Epoxide geeignet.

Vorzugsweise handelt es sich bei den Epoxidharzen um Glycidylether, die sich von mehrwertigen Alkoholen, insbesondere von mehrwertigen Phenolen wie beispielsweise Bisphenolen und Novolaken, ableiten, insbesondere solchen mit einer durchschnittlichen Glycidylgruppenfunktionalität von 1,5 oder größer, insbesondere von 2 oder größer, beispielsweise von 2 bis 10.

Die Epoxidharze können ein Epoxyäquivalentgewicht (EEW) von 120 bis 2000 g/EQ aufweisen, vorzugsweise von 140 bis 400, insbesondere 155 bis 195, beispielsweise 165 bis 185 aufweisen. Es können auch Mischungen mehrerer Epoxidharze verwendet werden.

Beispiele für die zur Herstellung der Epoxidharze eingesetzten mehrwertige Phenole sind Resorcin, Hydrochinon, 2,2-Bis-(4-Hydroxyphenyl)-propan (Bisphenol A), Isomerengemische des Dihydroxyphenylmethans (Bisphenol F), Tetrabrom-Bisphenol A, Novolake, 4,4'-Dihydroxyphenylcyclohexan und 4,4'-Dihydroxy-3,3'-dimethyldiphenylpropan.

Bevorzugt ist das Epoxidharz ein Diglycidylether von Bisphenol A oder von Bisphenol F oder einem Gemisch davon. Besonders bevorzugt werden flüssige Diglycidylether auf Basis von Bisphenol A und/oder F mit einem EEW von 180 bis 190 g/EQ verwendet.

Weitere Beispiele sind Hexandioldiglycidylether, Trimethylolpropan-triglycidylether, Bisphenol-A-Epichlorhydrinharze und/oder Bisphenol-F-Epichlorhydrinharze, beispielsweise mit einem durchschnittlichen Molekulargewicht von $Mn \leq 2000$ g/mol. Ein weiterer Gegenstand der vorliegenden Erfindung ist ein Mehrkomponenten-Epoxidharzsystem umfassend eine Epoxidharzkomponente (A) und eine Härterkomponente, wobei die Epoxidharzkomponente (A) ein härtbares Epoxidharz enthält, und die Härterkomponente wenigstens eine Mannich-Base und ein gegenüber Epoxidgruppen reaktives Amin umfasst, wobei die Mannich-Base erhältlich ist durch Umsetzung einer aus der aus Phenol, styrolisiertem Phenol, Brenzkatechin, Resorcin, Hydrochinon, Hydroxyhydrochinon, Phloroglucin, Pyrogallol, o-Kresol, m-Kresol, p-Kresol und Bisphenolen bestehenden Gruppe ausgewählten phenolischen Verbindung, mit einem Aldehyd oder einer Aldehydvorstufe und einem Amin mit wenigstens zwei an ein Stickstoffatom gebundenen aktiven Wasserstoffatomen im Molekül. Ferner umfasst das Mehrkomponenten-Epoxidharzsystem mindestens ein Salz (S) ausgewählt aus Salzen der Salpetersäure, Salzen der Salpetrigen Säure, Salzen der Halogene, Salzen der Trifluormethansulfonsäure und Kombinationen davon in der Epoxidharzkomponente (A) und/oder in der Härterkomponente. Bevorzugt ist das Mehrkomponenten-Epoxidharzsystem ein Zweikomponenten-Epoxidharzsystem.

Für das härtbare Epoxidharz, die Mannich-Base, das gegenüber Epoxidgruppen reaktive Amin und das Salz (S) des Mehrkomponenten-Epoxidharzsystems gelten die vorstehenden Ausführungen.

Das als Beschleuniger eingesetzte Salz (S) kann in der Epoxidharzkomponente (A) oder in der Härterkomponente oder sowohl in der Epoxidharzkomponente (A) als auch in der Härterkomponente enthalten sein. Es ist bevorzugt, dass das Salz (S) mindestens in der Härterkomponente, bevorzugt nur in der Härterkomponente, enthalten ist. In diesem Fall kommt im Mehrkomponenten-Epoxidharzsystem die zuvor beschriebene Härterzusammensetzung zum Einsatz.

Der Anteil an Epoxidharz an der Epoxidharzkomponente (A) beträgt >0 bis 100 Gew.-%, bevorzugt 10 bis 70 Gew.-% und besonders bevorzugt 30 bis 60 Gew.-%, bezogen auf das Gesamtgewicht der Harzkomponente (A).

Neben den Epoxidharzen kann die Epoxidharzkomponente (A) wahlweise mindestens einen Reaktivverdünner enthalten. Als Reaktivverdünner werden Glycidylether von aliphatischen, alicyclischen oder aromatischen Mono- oder insbesondere Polyalkoholen verwendet, die eine geringere Viskosität als aromatische Gruppen enthaltende Epoxide aufweisen. Beispiele für Reaktivverdünner sind Monoglycidylether, z.B. o-Kresylglycidylether, und Glycidylether mit einer Epoxid-Funktionalität von mindestens 2, wie 1,4-Butandioldiglycidylether (BDDGE), Cyclohexandimethanoldiglycidylether und Hexandioldiglycidylether, sowie Tri- oder höhere Glycidylether, wie Glycerintriglycidylether, Pentaerythrittetraglycidylether, Trimethylolpropantriglycidylether (TMPTGE) oder Trimethyloletantriglycidylether (TMETGE), wobei Trimethyloletantriglycidylether bevorzugt ist. Es können auch Mischungen von zwei oder mehr dieser Reaktivverdünner verwendet werden, vorzugsweise Triglycidylether enthaltende Mischungen, besonders bevorzugt als Gemisch aus 1,4-Butandioldiglycidylether (BDDGE) und Trimethylolpropantriglycidylether (TMPTGE) oder 1,4-Butandioldiglycidylether (BDDGE) und Trimethyloletantriglycidylether (TMETGE).

Die Reaktivverdünner liegen bevorzugt in einer Menge von 0 bis 60 Gew.-% vor, insbesondere von 1 bis 20 Gew.-%, bezogen auf das Gesamtgewicht der Harzkomponente (A).

Der Anteil der Epoxidkomponente (A) an der Gesamtmasse des Mehrkomponenten-Epoxidharzsystems beträgt vorzugsweise 5 bis 90 Gew.-%, insbesondere 20 bis 80 Gew.-%, 30 bis 70 Gew.-% oder 40 bis 60 Gew.-%.

Geeignete Epoxidharze und Reaktivverdünner sind auch in dem Standardwerk von Michael Dornbusch, Ulrich Christ und Rob Rasing, "Epoxidharze", Vincentz Network GmbH & Co KG (2015), ISBN 13: 9783866308770, zu finden. Diese Verbindungen werden hier durch Bezugnahme aufgenommen.

Des Weiteren kann die Epoxidharzkomponente (A) übliche Zusätze enthalten, insbesondere Haftvermittler und Füllstoffe, wie bereits für die Härterzusammensetzung beschrieben.

Der Haftvermittler kann in einer Menge bis zu 10 Gew.-%, bevorzugt 0,1 bis 5 Gew.-%, besonders bevorzugt 1,0 bis 5,0 Gew.-%, bezogen auf das Gesamtgewicht der Epoxidharzkomponente (A), enthalten sein.

Der Anteil an Füllstoffen beträgt vorzugsweise 0 bis 75 Gew.-%, beispielsweise 10 bis 75 Gew.-%, bevorzugt 15 bis 75 Gew.-% und weiter bevorzugt 20 bis 50 Gew.-%, noch weiter bevorzugt 25 bis 40 Gew.-%, bezogen auf das Gesamtgewicht der Epoxidharzkomponente (A).

Weitere denkbare Zusätze zur Epoxidharzkomponente (A) sind ferner Thixotropiermittel wie gegebenenfalls organisch nachbehandelte pyrogene Kieselsäure, Bentonite, Alkyl-und Methylcellulosen und Rhizinusölderivate, Weichmacher wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze wie Farbstoffe oder Pigmente, beispielsweise zum unterschiedlichen Anfärben der Komponenten zur besseren Kontrolle von deren Durchmischung, ebenso wie Netzmittel, Phlegmatisiermittel, Dispergiermittel und weitere Steuerungsmittel für die Reaktionsgeschwindigkeit, oder Gemische von zwei oder mehreren davon.

Das Mehrkomponenten-Epoxidharzsystem liegt vorzugsweise in Patronen, Kartuschen oder Folienbeuteln vor, die dadurch gekennzeichnet sind, dass sie zwei oder mehrere voneinander getrennte Kammern umfassen, in welchen die Epoxidharzkomponente (A) und die Härterkomponente reaktionsinhibierend voneinander getrennt angeordnet sind.

Zur bestimmungsgemäßen Anwendung des Mehrkomponenten-Epoxidharzsystems werden die Epoxidharzkomponente (A) und die Härterkomponente aus den getrennten Kammern entleert und in einer geeigneten Vorrichtung, beispielsweise einem Statikmischer oder einem Dissolver, gemischt. Die Mischung aus Epoxidharzkomponente (A) und Härterkomponente wird danach mittels einer bekannten Injektionsvorrichtung in das zuvor gereinigte Bohrloch eingebracht. Anschließend wird das zu fixierende Bauteil in die Mörtelmasse eingesetzt und justiert. Die reaktiven Bestandteile der Härterkomponente reagieren mit den Epoxidharzen der Harzkomponente (A) unter Polyaddition, sodass die Epoxidharzmasse unter Umgebungsbedingungen innerhalb einer gewünschten Zeit, vorzugsweise innerhalb weniger Minuten oder Stunden, aushärtet.

Die Komponenten A und B werden bevorzugt in einem Verhältnis gemischt, das entsprechend der EEW- und AHEW-Werte eine ausgeglichene Stöchiometrie ergibt.

Der AHEW-Wert *(amine hydrogen equivalent weight,* H-Äquivalent) gibt die Menge der Härterzusammensetzung an, die 1 mol reaktives H enthält Die Bestimmung des AHEW erfolgt in für den Fachmann bekannter Weise anhand der Formulierung der Reaktionsmischung aus den bekannten H-Äquivalenten der verwendeten Edukte und Rohstoffe, aus denen sie errechnet werden.

Am Beispiel von meta-Xylylendiamin ($M_w$ = 136 g/mol, Funktionalität = 4 eq/mol) ist die Errechnung des AHEW nachfolgend exemplarisch erläutert:

$$\text{Allgemeine Formel: } AHEW = \frac{M_W}{Funktionalit\ddot{a}t} = \frac{136}{4}\left\lfloor\frac{g}{eq}\right\rfloor = 34$$

Die EEW *(epoxide equivalent weight,* Epoxidäquivalentwerte) werden in der Regel von den Herstellern der jeweils verwendeten Epoxidharzkomponenten angegeben oder sie werden nach bekannten Methoden berechnet. Die EEW geben die Menge in g Epoxidharz an, die 1 Mol Epoxidgruppen enthält.

Experimentell wurde die AHEW durch Bestimmung der Glasübergangstemperatur (Tg) einer Mischung aus Epoxidharz (mit bekanntem EEW) und Aminkomponente erhalten. Es wurden dabei die Glasübergangstemperaturen von Epoxidharz/Amin-Mischungen mit unterschiedlichen Verhältnissen bestimmt. Die Probe wurde mit einer Heizrate von -20 K/min von 21 auf -70°C abgekühlt, in einem ersten Heizlauf auf 250°C erwärmt (Heizrate 10 K/min), anschließend wieder auf -70°C gekühlt (Heizrate -20 K/min) und im letzten Schritt auf 200°C erwärmt (20 K/min). Die Mischung mit der höchsten Glasübergangstemperatur im zweiten Heizlauf ("$T_g2$") besitzt das optimale Verhältnis von Epoxidharz und Amin. Aus dem bekannten EEW und dem optimalen Epoxidharz/Amin-Verhältnis lässt sich der AHEW-Wert berechnen. Beispiel: EEW = 158 g/mol

Mischung Amin/Epoxidharz mit maximaler $T_g2$: 1 g Amin mit 4,65 g Epoxidharz

$$AHEW = \frac{1}{4,65} \cdot 158 = 34 \left[ \frac{g}{eq} \right]$$

Die erfindungsgemäße Epoxidharzmasse bzw. das erfindungsgemäße Mehrkomponenten-Epoxidharzsystem wird bevorzugt für Bauzwecke eingesetzt. Der Begriff "für Bauzwecke" bedeutet das Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz. Ganz besonders bevorzugt dienen die erfindungsgemäßen Epoxidharzmassen und die erfindungsgemäßen Mehrkomponenten-Epoxidharzsysteme zur chemischen Befestigung von Verankerungsmitteln.

Ein weiterer Gegenstand der vorliegenden Erfindung ist ein Verfahren zur chemischen Befestigung von Konstruktionselementen in Bohrlöchern, wobei zur chemischen Befestigung der Konstruktionselemente eine erfindungsgemäße Epoxidharzmasse oder ein Mehrkomponenten-Epoxidharzsystem wie zuvor beschrieben verwendet wird. Das erfindungsgemäße Verfahren eignet sich insbesondere zum Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz. Ganz besonders bevorzugt dient das erfindungsgemäße Verfahren zur chemischen Befestigung von Verankerungsmitteln.

Ein weiterer Gegenstand der vorliegenden Erfindung ist die Verwendung mindestens eines Salzes (S) ausgewählt aus der Gruppe bestehend aus Salzen der Salpetersäure, Salzen der Salpetrigen Säure, Salzen der Halogene, Salzen der Trifluormethansulfonsäure sowie Kombinationen davon als Beschleuniger in einer Epoxidharzmasse zur chemischen Befestigung von Konstruktionselementen, insbesondere zur Verankerung von Befestigungselementen in Bohrlöchern. Die Epoxidharzmasse umfasst dabei wenigstens eine Mannich-Base und ein gegenüber Epoxidgruppen reaktives Amin, wobei die Mannich-Base erhältlich ist durch Umsetzung einer aus der aus Phenol, styrolisiertem Phenol, Brenzkatechin, Resorcin, Hydrochinon, Hydroxyhydrochinon, Phloroglucin, Pyrogallol, o-Kresol, m-Kresol, p-Kresol und Bisphenolen bestehenden Gruppe ausgewählten phenolischen Verbindung, mit einem Aldehyd oder einer Aldehydvorstufe und einem Amin mit wenigstens zwei an ein Stickstoffatom gebundenen aktiven Wasserstoffatomen im Molekül. Es ist bevorzugt, dass die Epoxidharzmasse in Form eines Mehrkomponenten-Epoxidharzsystems vorliegt, welche die zuvor beschriebenen Epoxidharzkomponente (A) und die Härterkomponente umfasst. Es ist weiterhin bevorzugt, dass das Salz (S) in der Härterkomponente enthalten ist und somit eine Härterzusammensetzung (B) wie zuvor beschrieben verwendet wird.

Die Verwendung mindestens eines Salzes (S) im Sinne der vorliegenden Erfindung als Beschleuniger in einer Epoxidharzmasse, insbesondere in einem Mehrkomponenten-Epoxidharzsystem, ermöglicht es, die Aushärtezeit der Epoxidharzmasse erheblich zu verkürzen und ferner eine ausreichende Auszugsfestigkeit bereits nach vier bis sechs Stunden zu gewährleisten. Ferner weisen die gehärteten Epoxidharzmasse eine hervorragende Auszugsfestigkeit in bei erhöhten Temperaturen und im wassergefüllten Bohrloch auf.

Die vorliegende Erfindung betrifft auch die Verwendung mindestens eines Salzes (S) ausgewählt aus der Gruppe bestehend aus Salzen der Salpetersäure, Salzen der Salpetrigen Säure, Salzen der Halogene, Salzen der Trifluormethansulfonsäure sowie Kombinationen davon als Beschleuniger in einer Epoxidharzmasse, insbesondere in einem Mehrkomponenten-Epoxidharzsystem. Die Epoxidharzmasse umfasst dabei wenigstens eine Mannich-Base und ein gegenüber Epoxidgruppen reaktives Amin, wobei die Mannich-Base erhältlich ist durch Umsetzung einer aus der aus Phenol, styrolisiertem Phenol, Brenzkatechin, Resorcin, Hydrochinon, Hydroxyhydrochinon, Phloroglucin, Pyrogallol, o-Kresol, m-Kresol, p-Kresol und Bisphenolen bestehenden Gruppe ausgewählten phenolischen Verbindung, mit einem Aldehyd oder einer Aldehydvorstufe und einem Amin mit wenigstens zwei an ein Stickstoffatom gebundenen aktiven Wasserstoffatomen im Molekül. Es ist bevorzugt, dass die Epoxidharzmasse in Form eines Mehrkomponenten-Epoxidharzsystems vorliegt, welche die zuvor beschriebenen Epoxidharzkomponente (A) und Härterkomponente umfasst. Es ist weiterhin bevorzugt, dass das Salz (S) in der Härterkomponente enthalten ist und somit eine Härterzusammensetzung (B) wie zuvor beschrieben verwendet wird.

Die Verwendung mindestens eines Salzes (S) im Sinne der vorliegenden Erfindung als Beschleuniger in einer Epoxidharzmasse, insbesondere in einer Mehrkomponenten-Epoxidharzmasse und weiterhin bevorzugt in der Härterkomponente der Mehrkomponenten-Epoxidharzmasse, ermöglicht insbesondere eine Erhöhung der Auszugsfestigkeit der Epoxidharzmasse bei erhöhten Temperaturen, wie beispielsweise in einem Temperaturbereich von 35 °C bis 50 °C.

Ferner ermöglicht die Verwendung mindestens eines Salzes (S) im Sinne der vorliegenden Erfindung als Beschleuniger in einer Epoxidharzmasse, insbesondere in einer Mehrkomponenten-Epoxidharzmasse und weiterhin bevorzugt in der Härterkomponente der Mehrkomponenten-Epoxidharzmasse, eine Erhöhung der Auszugsfestigkeit der Epoxidharzmassen in wassergefüllten Bohrlöchern.

Weitere Vorteile der Erfindung ergeben sich aus der nachfolgenden Beschreibung von bevorzugten Ausführungsbeispielen, die jedoch in keiner Weise als einschränkend zu verstehen sind. Alle Ausführungsformen der Erfindung können im Rahmen der Erfindung miteinander kombiniert werden.

AUSFÜHRUNGSBEISPIELE

**Epoxidharzkomponente (A)**

Ausgangsmaterialien

Als Epoxidharze wurden in den Beispielen die im Handel unter den Bezeichnungen Araldite GY 240 und Araldite 282 (Huntsman) erhältlichen Bisphenol A-basierten beziehungsweise Bisphenol F-basierten Epoxidharze verwendet.

Als Reaktivverdünner wurden die im Handel unter den Bezeichnungen Araldit DY-026 und AralditeTM DY-T (Huntsman) erhältlichen 1,4-Butandiol-diglycidylether und Trimethyolpropan-triglycidylether verwendet.

Als Haftvermittler wurde 3-Glycidyloxypropyl-trimethoxysysilan erhältlich unter der Bezeichnung Dynasylan GLYMO™ (Evonik Industries) verwendet.

Die flüssigen Komponenten wurden per Hand vorgemischt. Anschließend wurden als Füllstoff Quarz (Millisil™ W12 der Firma Quarzwerke Frechen) und als Verdicker pyrogene Kieselsäure (Cab-O-Sil™ TS- 720 der Firma Cabot Rheinfelden) zugegeben und die Mischung im Dissolver (PC Laborsystem, Volumen 1L) 10 min lang unter bei einem Unterdruck von 80 mbar bei 3500 U/min gerührt.

Die Zusammensetzung der in den Beispielen verwendeten Epoxidharzkomponenten A ist in der nachfolgenden Tabelle 1 angegeben.

**Tabelle** 1: Zusammensetzung der Epoxidharzkomponente A in Gew.-% (EEW 255 g/EQ)

| Stoff | Funktion | Gew.-% |
|---|---|---|
| 3-Glycidyloxypropyltrimethoxysilan | Haftvermittler | 2,8 |
| Bisphenol A-basiertes Epoxidharz | Epoxidharz | 31,4 |
| Bisphenol F-basiertes Epoxidharz | Epoxidharz | 16,7 |
| 1,4-Butanediol-diglycidyl ether | Reaktivverdünner | 6,0 |
| Trimethyolpropan-triglycidylether | Reaktivverdünner | 6,0 |
| Quarz | Füllstoff | 34,4 |
| Kieselsäure | Verdicker | 2,7 |

**Härterzusammensetzung (B)**

Als Mannichbasen wurden die im Handel unter der Bezeichnung Epikure Curing Agent 132 (mXDA-Bisphenol-A-basierte Mannichbase in mXDA der Firma Momentive Specialty Chemicals, NL) verwendet. Ferner wurden eine mXDA-Resorcin basierte Mannich-Base in mXDA, eine mXDA-Phenol-basierte Mannich-Base in mXDA sowie eine IPDA-Phenol basierte Mannich-Base in IPDA hergestellt. Methoden zur Herstellung der Mannichbasen sind in der EP0645408 A1 beschrieben.

Als Amine wurden m-Xylylendiamin (mXDA) und 1,3-Cyclohexandimethanamin (1,3-BAC) der Firma Mitsubishi Gas Chemical, Japan sowie Isophorondiamin (IPDA) der Firma Evonik Degussa, Deutschland zur Herstellung der Härterzusammensetzung (B) verwendet.

Als Haftvermittler wurde 3-Aminopropyl-triethoxysilan verwendet, welches unter dem Handelsnamen Dynasylan AMEO der Firma Evonik Degussa erhältlich ist.

Als Füllstoff wurde Quarz (Millisil™ W12 der Firma Quarzwerke Frechen) sowie Calciumaluminatzement (Secar 80 der Firma Kerneos SA) und als Verdicker pyrogene Kieselsäure (Cab-O-Sil™ TS-720 der Firma Cabot Rheinfelden) verwendet.

Zur Herstellung der in der Härterzusammensetzung B verwendete Salze (S) wurden die in der nachfolgenden Tabelle 2 angegebenen Bestandteile verwendet.

Tabelle 2: Verwendete Salze (S) als Beschleuniger

| Salz (S) | Handelsname | Hersteller |
|---|---|---|
| Calciumnitrat | Calciumnitrat-Tetrahydrat | Sigma-Aldrich |
| Natriumiodid | Natriumiodid | Sigma-Aldrich |
| Calciumtriflat | Calciumtrifluoromethansulfonat | Sigma-Aldrich |

Die Salze Calciumnitrat und Natriumiodid wurden als Lösungen in Glycerin (1,2,3-Propantriol, CAS-Nr. 56-81-5, Merck, D) eingesetzt. Zur Herstellung der Calciumnitrat-Lösung wurden 400,0 g Calciumnitrat-Tetrahydrat zu 100,0 g Glycerin gegeben und bei 50 °C bis zur vollständigen Lösung (3 Stunden) gerührt. Die so hergestellte Lösung enthielt 80,0 % Calciumnitrat-Tetrahydrat. Zur Herstellung der Natriumiodid-Lösung wurden 36,4 g Natriumiodid zu 63,6 g Glycerin gegeben und bis zur vollständigen Lösung gerührt. Die so hergestellte Lösung enthielt 36,4 % Natriumiodid.

Calciumtriflat wurde als Feststoff im Amin des jeweiligen Härters gelöst.

Beispiele 1 bis 8

Zur Herstellung der Härterzusammensetzungen (B) wurden die flüssigen Komponenten gemischt. Der Beschleuniger wurde hinzugegeben und anschließend wurden Quarzmehl und Kieselsäure zugegeben und im Dissolver (PC Laborsystem, Volumen 1L) bei einem Unterdruck von 80 mbar bei 3500 U/min für 10 min gerührt.

Die Zusammensetzung der so hergestellten Härterzusammensetzungen (B) ist in der nachstehenden Tabelle 3 angegeben:

Tabelle 3: Zusammensetzung der Härterzusammensetzungen (B) in Gew.-% (Beispiele 1 bis 10)

| | Beispiel | 1 | 2 | 3 | 4 | 5 | 6 | 7 | 8 | 9 | 10 |
|---|---|---|---|---|---|---|---|---|---|---|---|
| Mannich-Base/Amin | mXDA-Resorcin basierte Mannich Base/mXDA | 54,2 | 55,0 | 49,7 | - | - | - | - | - | - | - |
| | mXDA-Bisphenol-A basierte Mannich Base/mXDA | - | - | - | 54,2 | 55,0 | 49,7 | - | - | - | - |
| | mXDA-Phenol basierte Mannich Base/mXDA | - | - | - | - | - | - | 40,0 | 38,0 | - | - |
| | IPDA-Phenol basierte Mannich-Base/IPDA | - | - | - | - | - | - | - | - | 40,0 | 38,0 |
| Amin | mXDA | - | - | - | - | - | - | 14,2 | - | - | - |
| | IPDA | - | - | - | - | - | - | - | 13,7 | - | 13,7 |
| | 1,3-BAC | - | - | - | - | - | - | - | - | 13,0 | - |
| Salz (S) | Calciumnitrat | 3,8 | - | - | 3,8 | - | - | 3,8 | 6,3 | 5,0 | 6,3 |
| | Natriumiodid | - | - | 8,3 | - | - | 8,3 | - | - | - | - |
| | Calciumtriflat | - | 3,0 | - | - | 3,0 | - | - | - | - | - |
| | Haftvermittler | 2,0 | 2,0 | 2,0 | 2,0 | 2,0 | 2,0 | 2,0 | 2,0 | 2,0 | 2,0 |
| | Quarz | 37,3 | 37,3 | 37,3 | 37,3 | 37,3 | 37,3 | 37,3 | 37,3 | 37,3 | 37,3 |
| | Verdicker | 2,7 | 2,7 | 2,7 | 2,7 | 2,7 | 2,7 | 2,7 | 2,7 | 2,7 | 2,7 |
| | **AHEW [g/Eq]** | **87** | **86** | **95** | **96** | **95** | **105** | **98** | **111** | **94** | **102** |

Vergleichsbeispiele 1 und 3

Zur Herstellung der Härterzusammensetzungen (B) der Vergleichsbeispiele wurden die flüssigen Komponenten gemischt. Der Beschleuniger wurde hinzugegeben und anschließend wurden Quarzmehl und Kieselsäure zugegeben und im Dissolver (PC Laborsystem, Volumen 1L) bei einem Unterdruck von 80 mbar bei 3500 U/min für 10 min gerührt. Als Beschleuniger wurde der kommerziell erhältliche Beschleuniger Ancamin K54 (2,4,6-Tris(dimethylaminomethyl)phenol, Bis[(dimethylamino)methyl]phenol) der Firma Evonik verwendet.

Die Zusammensetzung der so hergestellten Härterzusammensetzungen (B) ist in der nachstehenden Tabelle 4 angegeben:

**Tabelle 4**: Zusammensetzung der Härterzusammensetzungen (B) in Gew.-% (Vergleichsbeispiele 1 bis 7)

| | Beispiel | 1 | 2 | 3 | 4 | 5 | 6 | 7 |
|---|---|---|---|---|---|---|---|---|
| Mannich-Base/Amin | mxDA-Resorcin basierte Mannich Base/mXDA | 55,0 | | | - | | | |
| | mxDA-Bisphenol-A basierte Mannich Base/mXDA | - | 55,0 | | | - | | |
| | mxDA-Phenol basierte Mannich Base/mXDA | - | - | 40,0 | 40,0 | - | - | - |
| | IPDA-Phenol basierte Mannich-Base/IPDA | - | - | - | - | 40,0 | 40,0 | - |
| Amin | mXDA | - | - | 15,0 | - | - | - | 41,2 |
| | IPDA | - | - | - | 15,0 | - | 15,0 | - |
| | 1,3-BAC | - | - | - | - | 15,0 | - | - |
| Beschleuniger | Ancamin K54 | 3,0 | 3,0 | 3,0 | 3,0 | 3,0 | 3,0 | - |
| | Calciumnitrat | - | - | - | - | - | - | 3,8 |
| | Haftvermittler | 2,0 | 2,0 | 2,0 | 2,0 | 2,0 | 2,0 | - |
| | Quarz | 37,3 | 37,3 | 37,3 | 37,3 | 37,3 | 37,3 | 25,0 |
| | Verdicker | 2,7 | 2,7 | 2,7 | 2,7 | 2,7 | 2,7 | 5,0 |
| | Calciumaluminatzement | - | - | - | - | - | - | 25,0 |
| | **AHEW [g/Eq]** | **86** | **95** | **95** | **104** | **89** | **95** | **83** |

**Mörtelmassen und Auszugsversuche**

Die Epoxidharzkomponente (A) und die Härterzusammensetzung (B) wurden in einem Speedmixer in einem Verhältnis gemischt, das entsprechend der EEW- und AHEW-Werte eine ausgeglichene Stöchiometrie ergab. Das Gemisch wurde möglichst blasenfrei in eine 1K-Kartusche gefüllt und sofort in das für die Auszugsversuche präparierte Bohrloch injiziert.

Die Auszugsfestigkeit der durch Mischen der Epoxidharzkomponente (A) und Härterzusammensetzung (B) gemäß den oben angegebenen Beispielen erhaltenen Mörtelmassen wurden unter Verwendung einer hochfesten Ankergewindestange M12 gemäß ETAG 001 Part 5 bestimmt, die in ein hammergebohrtes Bohrloch mit einem Durchmesser von 14 mm und einer Bohrlochtiefe von 69 mm mit der jeweiligen Mörtelmasse in C20/25 Beton eingedübelt wurde. Die Bohrlöcher wurden mit Druckluft (2 × 6 bar), einer Drahtbürste (2 x) und anschließend wieder Druckluft (2 × 6 bar) gereinigt.

Die Bohrlöcher wurden vom Bohrgrund her mit der jeweils zu prüfenden Mörtelmasse zu zwei Dritteln befüllt. Die Gewindestange wurde von Hand eingedrückt. Der Mörtelüberschuss wurde mittels eines Spachtels entfernt.

Die Aushärtezeit bei Versuch 1 betrug 4 h bei 21 °C. Bei Versuch 2 betrug die Aushärtezeit 6 Stunden bei 21 °C. Bei Versuch 3 betrug die Aushärtezeit 24 Stunden bei 21 °C. Bei Versuch 4 betrug die Aushärtezeit 24 Stunden bei 25 °C, anschließend erfolgte eine Lagerung bei 80°C für 24 Stunden. Der Auszugstest wurde bei 80 °C durchgeführt.

In Versuch 5 (F1c) wurde das Bohrloch nach Bohren und Reinigung (einmal Ausblasen mit Druckluft (6 bar), einmal Bürsten und anschließend nochmals einmal Ausblasen mit Druckluft (6 bar)) mit Wasser aufgefüllt. Das Injizieren des Mörtels geschah über eine Mischerverlängerung mit Stauzapfen in das wassergefüllte Bohrloch. Die Aushärtezeit des Mörtels betrug 48h bei 25°C.

Die Versagenslast wurde durch zentrisches Ausziehen der Ankergewindestange mit enger Abstützung ermittelt. Die mit den Mörtelmassen unter Verwendung einer Härterzusammensetzung (B) gemäß den Beispielen 1 bis 8 und den Vergleichsbeispielen 1 bis 5 erhaltenen Lastwerte sind der folgenden Tabelle 5 zu entnehmen.

**Tabelle** 5: Bestimmung der Lastwerte der erfindungsgemäßen Beispiele 1 bis 10

| | | Beispiele | | | | | | | | | |
|---|---|---|---|---|---|---|---|---|---|---|---|
| | | 1 | 2 | 3 | 4 | 5 | 6 | 7 | 8 | 9 | 10 |
| Auszugsversuche | Versuch Nummer | Lastwert [N/mm$^2$] | | | | | | | | | |
| Aushärtung 4h | 1 | 21,8 | 19,5 | 17,9 | 26,2 | 25,4 | 23,5 | 23,5 | 20,0 | 18,0 | 13,3 |
| Aushärtung 6h | 2 | 25,6 | 27,1 | 25,5 | 30,7 | 29,6 | 30,8 | 32,1 | 28,9 | n.a. | n.a. |
| Aushärtung 24h | 3 | 33,6 | 34,1 | 33,5 | 33,9 | 33,5 | 33,9 | 36,1 | 36,0 | 38,4 | 37,7 |
| 80 °C | 4 | n.a. | n.a. | n.a. | n.a. | n.a. | n.a. | n.a. | n.a. | 26,5 | 27,7 |
| F1c | 5 | 22,4 | n.a. | n.a. | n.a. | n.a. | n.a. | n.a. | n.a. | 24,9 | 24,5 |

**Tabelle 6**: Bestimmung der Lastwerte der Vergleichsbeispiele 1 bis 7

| | | Vergleichs beispiel | | | | | | |
|---|---|---|---|---|---|---|---|---|
| | | 1 | 2 | 3 | 4 | 5 | 6 | 7 |
| Auszugsversuche | Versuch Nummer | Lastwert [N/mm$^2$] | | | | | | |
| Aushärtung 4h | 1 | 2,2 | 7,5 | 0,7 | 0,2 | 0,3 | 0,0 | n.a. |
| Aushärtung 6h | 2 | 23,6 | 28,2 | 24,6 | 15,1 | n.a. | n.a. | n.a. |
| Aushärtung 24h | 3 | 34,5 | 33,1 | 38,3 | 35,1 | 37,4 | 36,8 | 38,8 |
| 80 °C | 4 | n.a. | n.a. | n.a. | n.a. | n.a. | n.a. | 23,9 |
| F1c | 5 | n.a. | n.a. | n.a. | n.a. | n.a. | n.a. | 20,6 |

Die erfindungsgemäßen Epoxidharzmassen mit Härterzusammensetzungen gemäß den Beispielen 1 bis 8 zeigen eine wesentlich schnellere Aushärtung als die Epoxidharzmassen mit den Härterzusammensetzungen der Vergleichsbeispiele 1 bis 4. Die mit den erfindungsgemäßen Härterzusammensetzungen hergestellten Mörtelmassen für Befestigungszwecke sind bereits nach 6 h belastbar. Damit können die Wartezeiten vor dem nächsten Arbeitsschritt erheblich verkürzt und Folgearbeiten viel früher durchgeführt werden.

**Patentansprüche**

1. Härterzusammensetzung umfassend mindestens eine Mannich-Base und mindestens ein gegenüber Epoxidgruppen reaktives Amin,

   wobei die Mannich-Base erhältlich ist durch Umsetzung einer aus Phenol, styrolisiertem Phenol, Brenzkatechin, Resorcin, Hydrochinon, Hydroxyhydrochinon, Phloroglucin, Pyrogallol, o-Kresol, m-Kresol, p-Kresol und Bisphenolen bestehenden Gruppe ausgewählten phenolischen Verbindung, mit einem Aldehyd oder einer Aldehydvorstufe und einem Amin mit wenigstens zwei an ein Stickstoffatom gebundenen aktiven Wasserstoffatomen im Molekül,
   **dadurch gekennzeichnet, dass** die Härterzusammensetzung mindestens ein Salz (S) ausgewählt aus der Gruppe bestehend aus Salzen der Salpetersäure, Salzen der Salpetrigen Säure, Salzen der Halogene, Salzen der Trifluormethansulfonsäure und Kombinationen davon umfasst.

2. Härterzusammensetzung nach Anspruch 1, **dadurch gekennzeichnet, dass** das gegenüber Epoxidgruppen reaktive Amin ausgewählt ist aus der Gruppe bestehend aus aliphatischen, alicyclischen, araliphatischen und aromatischen Aminen, wobei das Amin im Mittel mindestens zwei an ein Stickstoffatom gebundene reaktive Wasserstoffatome pro Molekül aufweist, und bevorzugt ein Polyamin mit mindestens zwei Aminogruppen im Molekül ist.

3. Härterzusammensetzung nach Anspruch 1 oder 2, **dadurch gekennzeichnet, dass** das Salz (S) ausgewählt ist aus der Gruppe bestehend aus Nitrat ($NO_3^-$), Iodid ($I^-$), Triflat ($CF_3SO_3^-$) sowie Kombinationen davon.

**4.** Härterzusammensetzung nach einem der vorhergehenden Ansprüche, **dadurch gekennzeichnet, dass** das Salz (S) ein Kation ausgewählt aus der Gruppe bestehend aus Alkalimetallen, Erdalkalimetallen, Lanthanoiden, Aluminium, Ammonium und Kombinationen davon umfasst.

**5.** Härterzusammensetzung nach einem der vorhergehenden Ansprüche, **dadurch gekennzeichnet, dass** der Aldehyd ein aliphatischer Aldehyd ist, bevorzugt Formaldehyd, und dass die Aldehyd-Vorstufe Trioxan oder Paraformaldehyd umfasst.

**6.** Härterzusammensetzung nach einem der vorhergehenden Ansprüche, **dadurch gekennzeichnet, dass** die Mannich-Base unter Verwendung von mindestens einem der gegenüber Epoxidgruppen reaktiven Amine gebildet ist, bevorzugt unter Verwendung eines Polyamins.

**7.** Härterzusammensetzung nach einem der vorhergehenden Ansprüche, **dadurch gekennzeichnet, dass** das Salz (S) in einem Anteil von 0,1 bis 15 Gew.-% bezogen auf das Gesamtgewicht der Härterzusammensetzung enthalten ist.

**8.** Epoxidharzmasse enthaltend mindestens ein härtbares Epoxidharz und eine Härterzusammensetzung nach einem der vorhergehenden Ansprüche.

**9.** Epoxidharzmasse nach Anspruch 8, **dadurch gekennzeichnet, dass** die Epoxidharzmasse eine Mehrkomponenten-Epoxidharzmasse ist.

**10.** Mehrkomponenten-Epoxidharzsystem enthaltend

eine Epoxidharzkomponente (A) und eine Härterkomponente, wobei die Epoxidharzkomponente (A) ein härtbares Epoxidharz enthält, und die Härterkomponente mindestens eine Mannich-Base und mindestens ein gegenüber Epoxidgruppen reaktives Amin enthält,
wobei die Mannich-Base erhältlich ist durch Umsetzung einer aus Phenol, styrolisiertem Phenol, Brenzkatechin, Resorcin, Hydrochinon, Hydroxyhydrochinon, Phloroglucin, Pyrogallol, o-Kresol, m-Kresol, p-Kresol und Bisphenolen bestehenden Gruppe ausgewählten phenolischen Verbindung, mit einem Aldehyd oder einer Aldehydvorstufe und einem Amin mit wenigstens zwei an ein Stickstoffatom gebundenen aktiven Wasserstoffatomen im Molekül, **dadurch gekennzeichnet, dass** mindestens ein Salz (S) ausgewählt aus Salzen der Salpetersäure, Salzen der Salpetrigen Säure, Salzen der Halogene, Salzen der Trifluormethansulfonsäure und Kombinationen davon in der Epoxidharzkomponente (A) und/oder in der Härterkomponente enthalten ist.

**11.** Mehrkomponenten-Epoxidharzsystem nach Anspruch 10, **dadurch gekennzeichnet, dass** das Salz (S) in der Härterkomponente enthalten ist.

**12.** Verfahren zur chemischen Befestigung von Konstruktionselementen in Bohrlöchern, wobei zur chemischen Befestigung eine Epoxidharzmasse nach Anspruch 8 oder 9 oder ein Mehrkomponenten-Epoxidharzsystem nach Anspruch 10 oder 11 verwendet wird.

**13.** Verwendung mindestens eines Salzes (S) ausgewählt aus der Gruppe bestehend aus Salzen der Salpetersäure, Salzen der Salpetrigen Säure, Salzen der Halogene, Salzen der Trifluormethansulfonsäure sowie Kombinationen davon als Beschleuniger in einer Epoxidharzmasse umfassend mindestens eine Mannich-Base und mindestens ein gegenüber Epoxidgruppen reaktives Amin,
wobei die Mannich-Base erhältlich ist durch Umsetzung einer aus Phenol, styrolisiertem Phenol, Brenzkatechin, Resorcin, Hydrochinon, Hydroxyhydrochinon, Phloroglucin, Pyrogallol, o-Kresol, m-Kresol, p-Kresol und Bisphenolen bestehenden Gruppe ausgewählten phenolischen Verbindung, mit einem Aldehyd oder einer Aldehydvorstufe und einem Amin mit wenigstens zwei an ein Stickstoffatom gebundenen aktiven Wasserstoffatomen im Molekül, zur chemischen Befestigung.

**Claims**

**1.** Hardener composition comprising at least one Mannich base and at least one amine which is reactive to epoxy groups,

the Mannich base being obtainable by reacting a phenolic compound, selected from the group consisting of phenol, styrenated phenol, pyrocatechol, resorcinol, hydroquinone, hydroxyhydroquinone, phloroglucinol, pyrogallol, o-cresol, m-cresol, p-cresol and bisphenols, with an aldehyde or an aldehyde precursor and an amine having at least two active hydrogen atoms in the molecule which are bonded to a nitrogen atom, **characterized in that** the curing agent composition contains at least one salt (S) selected from the group consisting of salts of nitric acid, salts of nitrous acid, salts of halogens, salts of trifluoromethanesulfonic acid, and combinations thereof.

2. Hardener composition according to claim 1, **characterized in that** the amine which is reactive to epoxy groups is selected from the group consisting of aliphatic, alicyclic, araliphatic and aromatic amines, the amine having on average at least two reactive hydrogen atoms per molecule which are bonded to a nitrogen atom, and is preferably a polyamine having at least two amino groups in the molecule.

3. Hardener composition according to either claim 1 or claim 2, **characterized in that** the salt (S) is selected from the group consisting of nitrates ($NO_3^-$), iodides ($I^-$), triflates ($CF_3SO_3^-$), and combinations thereof.

4. Hardener composition according to any of the preceding claims, **characterized in that** the salt (S) comprises a cation selected from the group consisting of alkali metals, alkaline earth metals, lanthanoids, aluminum, ammonium, and combinations thereof.

5. Hardener composition according to any of the preceding claims, **characterized in that** the aldehyde is an aliphatic aldehyde, preferably formaldehyde, and **in that** the aldehyde precursor comprises trioxane or paraformaldehyde.

6. Hardener composition according to any of the preceding claims, **characterized in that** the Mannich base is formed using at least one amine which is reactive to epoxy groups, preferably using a polyamine.

7. Hardener composition according to any of the preceding claims, **characterized in that** the salt (S) is contained in a proportion of from 0.1 to 15 wt.%, based on the total weight of the curing agent composition.

8. Epoxy resin composition containing at least one curable epoxy resin and a hardener composition according to any of the preceding claims.

9. Epoxy resin composition according to claim 8, **characterized in that** the epoxy resin composition is a multi-component epoxy resin composition.

10. Multi-component epoxy resin system containing

    an epoxy resin component (A) and a hardener component, the epoxy resin component (A) containing a curable epoxy resin, and the hardener component containing at least one Mannich base and at least one amine which is reactive to epoxy groups,
    the Mannich base being obtainable by reacting a phenolic compound, selected from the group consisting of phenol, styrenated phenol, pyrocatechol, resorcinol, hydroquinone, hydroxyhydroquinone, phloroglucinol, pyrogallol, o-cresol, m-cresol, p-cresol and bisphenols, with an aldehyde or an aldehyde precursor and an amine having at least two active hydrogen atoms in the molecule which are bonded to a nitrogen atom, **characterized in that** at least one salt (S) selected from salts of nitric acid, salts of nitrous acid, salts of halogens, salts of trifluoromethanesulfonic acid, and combinations thereof is contained in the epoxy resin component (A) and/or in the hardener component.

11. Multi-component epoxy resin system according to claim 10, **characterized in that** the salt (S) is contained in the hardener component.

12. Method for the chemical fastening of construction elements in boreholes, wherein an epoxy resin composition according to either claim 8 or claim 9 or a multi-component epoxy resin system according to either claim 10 or claim 11 is used for the chemical fastening.

13. Use of at least one salt (S) selected from the group consisting of salts of nitric acid, salts of nitrous acid, salts of halogens, salts of trifluoromethanesulfonic acid, and combinations thereof as an accelerator in an epoxy resin composition comprising at least one Mannich base and at least one amine which is reactive to epoxy groups, wherein the Mannich base being obtainable by reacting a phenolic compound, selected from the group consisting of phenol, styrenated phenol, pyrocatechol, resorcinol, hydroquinone, hydroxyhydroquinone, phloroglucinol, pyrogallol, o-cresol, m-cresol, p-cresol and bisphenols, with an aldehyde or an aldehyde precursor and an amine having at least two active hydrogen atoms in the molecule which are bonded to a nitrogen atom, for the chemical fastening.

**Revendications**

1. Composition durcisseuse comprenant au moins une base de Mannich et au moins une amine réactive aux groupes époxy,

    dans laquelle la base de Mannich peut être obtenue par réaction d'un composé phénolique choisi dans le groupe constitué par le phénol, le phénol styréné, le pyrocatéchol, le résorcinol, l'hydroquinone, l'hydroxyhydroquinone, le phloroglucinol, le pyrogallol, l'o-crésol, le m-crésol, le p-crésol et les bisphénols, avec un aldéhyde ou un précurseur d'aldéhyde et une amine comportant au moins deux atomes d'hydrogène actifs liés à un atome d'azote dans la molécule,
    **caractérisée en ce que** la composition durcisseuse comprend au moins un sel (S) choisi dans le groupe constitué par les sels d'acide nitrique, les sels d'acide nitreux, les sels d'halogènes, les sels d'acide trifluorométhanesulfonique et leurs combinaisons.

2. Composition durcisseuse selon la revendication 1, **caractérisée en ce que** l'amine réactive aux groupes époxy est choisie dans le groupe constitué par les amines aliphatiques, alicycliques, araliphatiques et aromatiques, l'amine présentant en moyenne au moins deux atomes d'hydrogène réactifs liés à un atome d'azote par molécule, et étant de préférence une polyamine comportant au moins deux groupes amino dans la molécule.

3. Composition durcisseuse selon la revendication 1 ou 2, **caractérisée en ce que** le sel (S) est choisi dans le groupe constitué par le nitrate ($NO_3^-$), l'iodure ($I^-$), le triflate ($CF_3SO_3^-$) et leurs combinaisons.

4. Composition durcisseuse selon l'une des revendications précédentes, **caractérisée en ce que** le sel (S) comprend un cation choisi dans le groupe constitué par les métaux alcalins, les métaux alcalino-terreux, les lanthanides, l'aluminium, l'ammonium et leurs combinaisons.

5. Composition durcisseuse selon l'une des revendications précédentes, **caractérisée en ce que** l'aldéhyde est un aldéhyde aliphatique, de préférence un formaldéhyde, et que le précurseur d'aldéhyde comprend du trioxane ou du paraformaldéhyde.

6. Composition durcisseuse selon l'une des revendications précédentes, **caractérisée en ce que** la base de Mannich est formée à l'aide d'au moins l'une des amines réactives aux groupes époxy, de préférence à l'aide d'une polyamine.

7. Composition durcisseuse selon l'une des revendications précédentes, **caractérisée en ce que** le sel (S) est contenu en une proportion de 0,1 à 15 % en poids, par rapport au poids total de la composition durcisseuse.

8. Matière de résine époxy contenant au moins une résine époxy durcissable et une composition durcisseuse selon l'une des revendications précédentes.

9. Matière de résine époxy selon la revendication 8, **caractérisée en ce que** la matière de résine époxy est une matière de résine époxy à plusieurs composants.

10. Système de résine époxy à plusieurs composants contenant un composant de résine époxy (A) et un composant durcisseur, dans lequel le composant de résine époxy (A) contient une résine époxy durcissable, et le composant durcisseur contient au moins une base de Mannich et au moins une amine réactive aux groupes époxy,
dans lequel la base de Mannich peut être obtenue par réaction d'un composé phénolique choisi dans le groupe constitué par le phénol, le phénol styréné, le pyrocatéchol, le résorcinol, l'hydroquinone, l'hydroxyhydroquinone, le phloroglucinol, le pyrogallol, l'o-crésol, le m-crésol, le p-crésol et les bisphénols, avec un aldéhyde ou un précurseur d'aldéhyde et une amine comportant au moins deux atomes d'hydrogène actifs liés à un atome d'azote dans la molécule, **caractérisé en ce qu'**au moins un sel (S) choisi parmi les sels d'acide nitrique, les sels d'acide nitreux, les sels d'halogènes, les sels d'acide trifluorométhanesulfonique et leurs combinaisons est contenu dans le composant de résine époxy (A) et/ou dans le composant durcisseur.

**11.** Système de résine époxy à plusieurs composants selon la revendication 10, **caractérisé en ce que** le sel (S) est contenu dans le composant durcisseur.

**12.** Procédé de fixation chimique d'éléments de construction dans des trous de forage, dans lequel une matière de résine époxy selon la revendication 8 ou 9 ou un système de résine époxy à plusieurs composants selon la revendication 10 ou 11 est utilisé pour la fixation chimique.

**13.** Utilisation d'au moins un sel (S) choisi dans le groupe constitué par les sels d'acide nitrique, les sels d'acide nitreux, les sels d'halogènes, les sels d'acide trifluorométhanesulfonique et leurs combinaisons comme accélérateur dans une matière de résine époxy comprenant au moins une base de Mannich et au moins une amine réactive aux groupes époxy,
dans laquelle la base de Mannich peut être obtenue par réaction d'un composé phénolique choisi dans le groupe constitué par le phénol, le phénol styréné, le pyrocatéchol, le résorcinol, l'hydroquinone, l'hydroxyhydroquinone, le phloroglucinol, le pyrogallol, l'o-crésol, le m-crésol, le p-crésol et les bisphénols, avec un aldéhyde ou un précurseur d'aldéhyde et une amine comportant au moins deux atomes d'hydrogène actifs liés à un atome d'azote dans la molécule, pour la fixation chimique.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013113465 A
- WO 2005090433 A
- US 5629380 A
- WO 2014067095 A
- EP 3000792 A1
- EP 0645408 A1

**In der Beschreibung aufgeführte Nicht-Patentliteratur**

- IUPAC Compendium of Chemical Terminology. **A. D. MCNAUGHT ; A. WILKINSON.** Gold Book. Blackwell Scientific Publications, 1997
- **MICHAEL DORNBUSCH ; ULRICH CHRIST ; ROB RASING.** Epoxidharze. Vincentz Network GmbH & Co KG, 2015
- Dissolver. *PC Laborsystem,* vol. 1L
- *CHEMICAL ABSTRACTS,* 56-81-5